# EUROPEAN PATENT SPECIFICATION

(11) **EP 0 529 651 B1**
(45) Date of publication and mention of the grant of the patent: **05.02.1997**
(21) Application number: 92114734.4
(22) Date of filing: 28.08.1992
(51) Int. Cl.: B29B 7/76, B29C 67/24

(54) **Process for reaction injection molding non-precatalyzed polymerizable monocomponent resins**
Verfahren zum Reaktionsspritzgiessen von nicht vorkatalysierten polymerisierbaren Einkomponentharzen
Procédé de moulage réactif par injection de résines non-précatalysées, polymérisables à un seul composant

(30) Priority: 28.08.1991 IT MI912306
(43) Date of publication of application: 03.03.1993
(73) Proprietor: MONTELL ITALIA S.p.A., 20124 Milano (IT)
(72) Inventor: Addeo, Antonio, I-28100 Novara (IT); d'Oria, Francesco, I-20133 Milan (IT); Bonari, Roberto, I-20023 Cerro Maggiore, Milan (IT)
(74) Representative: Zumstein, Fritz, Dr.

(56) References cited:
- EP-A- 0 024 330
- DE-A- 2 703 755
- DE-A- 3 542 408
- DE-A- 3 616 100
- FR-A- 2 222 189
- DATABASE WPIL Week 8546, Derwent Publications Ltd., London, GB; AN 85-285432 & JP-A-60 193 624 (MATSUSHITA ELEC IND KK) 2 October 1985
- PATENT ABSTRACTS OF JAPAN vol. 10, no. 033 (M-452)8 February 1986 & JP-A-60 189 410 (MAZDA KK ) 26 September 1985
- PATENT ABSTRACTS OF JAPAN vol. 13, no. 202 (M-824)(3550) 12 May 1989 & JP-A-12 4 712 (MAZDA MOTOR CORP) 26 January 1989

## Description

The present invention relates to a process for the injection of a system of one or more non-precatalyzed, polymerizable, monocomponent or hybrid resins at high pressure and at high flow.

The term "non-precatalyzed, polymerizable resins" as is used in the present specification and in the claims mainly designates the thermoplastic resins, for example anionic PA (Polyamide), or thermosetting resins, for example unsaturated polyester resins, or hybrid resins, for example IPN (Interpenetrating Polymer Networks), properly catalyzed.

As is well known, in the Resin Transfer Molding (RTM) technology, a flow consisting of thermosetting monomer and catalyst (monocomponent system) is premixed in a proper mixing head and is pumped at low pressures, of the order of 2-5 atmospheres, into a properly preheated mold.

The utilization of low molding pressures permits, on one side, to use less expensive molds made of less resistant materials, but on the other side negatively affects the cycle time, particularly when the articles to be molded are large size pieces. In fact, with this type of technologies, the maximum deliveries of the metering pumps are not very high and do not exceed 100-150 cc/second.

On conclusion of the mixing/injection (shot) step it is necessary to use a solvent for cleaning the mixer. Such an operation represents an evident penalization in terms of cycle time and involves environmental problems connected with the use of solvents.

To overcome these drawbacks, monocomponent systems have been prepared, which are endowed with a rapid polymerization kinetics and are characterized by total cross-linking times lower than 5 minutes. Also with these systems, however, the total molding cycle on large pieces is always badly affected by the slowness of the injection step, what results in a remarkably lower productivity than the one which is potentially permitted by the above-mentioned kinetic characteristics.

DE-A-27 03 755 describes a mixing chamber for a multi-component polymer, particularly polyurethane, wherein at least two inlets are provided for each component. The openings are opposite each other and are opened/closed by a moving ram.

A further method suggested to reduce the cycle times in the molding of monocomponent thermosetting resins is the one which utilizes RIM (Reaction Injection Molding) machines and monocomponent resins divided into two flows.

As is known, the RIM technology, which has been developed for the injection of mixed two-component resins at high pressures, is based on the impingement principle, namely on the impingement of two opposed flows injected by means of suitable nozzles into a mixing head equipped with a self-cleaning piston system. Thanks to this system, no cleanings of the mixing chamber are required. In fact, the self-cleaning piston is capable of expelling from the chamber the residual material after the shot.

The RIM technology applied to the monocomponent resins comprises subdividing the latter into two flows, one of which is composed of basic resin and accelerator while the other is composed of basic resin and catalyst. These two flows are mixed in in RIM heads by opposition of the flows.

This method, although it permits to accelerate the monocomponent resin molding cycle, is not free from drawbacks owing to the instability of the already catalyzed flow. This instability, besides creating some difficulties during the storing step, can give rise to undesired precocious polymerizations owing to localized overheating phenomena which can occur during the process in different points of the production plant.

The Applicant has now found a process for polymerizing one or more non-precatalyzed, polymerizable, monocomponent or hybrid resins which, utilizing a differentiated feeding of the non-precatalyzed monomers and of the catalytic system to a proper mixing head, permits to employ high pressures and high feeding flows to the production molds and, by consequence, to sensibly increase the molding speed, even for large-size articles without incurring the drawbacks of the prior art.

Thus, it is an object of the present invention to provide a process for the injection molding of systems of one or more non-precatalyzed, polymerizable, monocomponent or hybrid resins at high pressure and flow which comprises:
a) withdrawing from at least a first storage tank at least a flow composed of a non-precatalyzed, polymerizable, monocomponent or hybrid resin;
b) withdrawing from a second storage tank one or more flows composed of one or more catalytic, resin-setting systems;
c) injecting at high pressure the two or more flows into a mixing head equipped with at least two injection points, a cylindrical mixing chamber and a self-cleaning piston capable of sliding within said chamber;
d) discharging the resulting mixture by means of the self-cleaning piston of the mixing head.

According to a preferred embodiment of the process of the present invention, the polymerizable resin flows withdrawn from the respective storage tanks are two and they are fed to two injection points of the mixing head, for example of the RIM type, while the catalyst flow is fed to the same head through a third inlet, which is shifted with respect to the other two inlets.

According to another preferred embodiment of the process of the present invention, the catalyst flows are two and they are fed to the mixing head through a third and fourth inlet.

The flowrates of the polymerizable resin and of the catalyst depend on several factors such as, for example, the dimensions of the mixing head and of the articles to be produced, while the injection pressures range from 1 to 300 bar. The weight ratios of resin to catalyst range from 10/1 to 2,000/1.

An apparatus for the injection molding of non-precatalyzed, polymerizable, monocomponent or hybrid resins at high pressure and high flow can comprise:
i) at least a first storage tank for the polymerizable resin;
ii) at least a second storage tank for the resin-setting catalyst;
iii) a mixing head equipped with a cylindrical mixing head, a self-cleaning molding piston, which is capable of sliding within said chamber, and at least two injection points or inlets; and
iv) means, for example positive-displacement pumps, suited to withdraw resin and catalyst from the respective tanks and to inject them to the injection points in the mixing head.

The process for the injection molding of non precatalyzed, polymerizable, monocomponent or hydrid resins which is an object of the present invention can be better understood from the following detailed description, in which reference is made to the figures of the annexed drawings illustrating examples of apparatuses, which are utilizable for executing the process. In particular:
- figure 1: shows a scheme of an apparatus equipped with a mixing head having only two inlets;
- figure 2: shows a scheme of an apparatus in which the mixing head has three inlets, one of which feeds the catalyst and the other two feed only one non-precatalyzed polymerizable resin;
- figure 3: shows a scheme of an apparatus in which the mixing head has three inlets, one of which feeds the catalyst and the other two feed two different non-precatalyzed polymerizable resins; and
- figure 4: shows a scheme of an apparatus, in which the mixing head has four inlets, two of which for the resins and two for the catalysts.

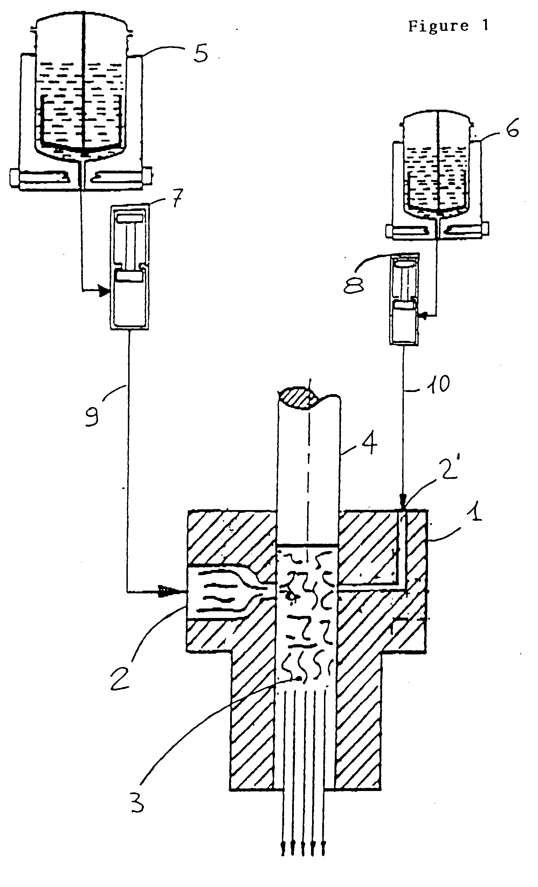

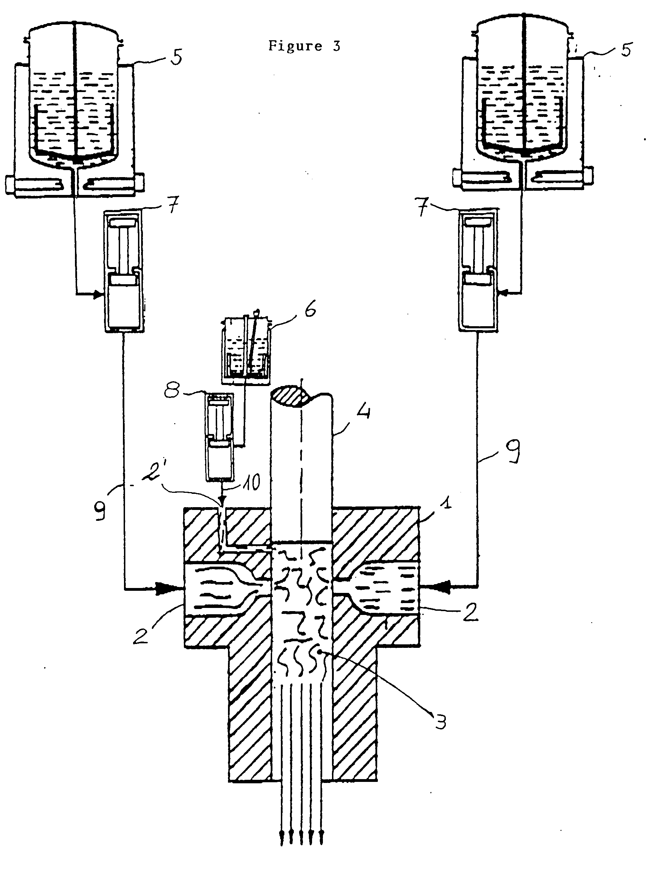

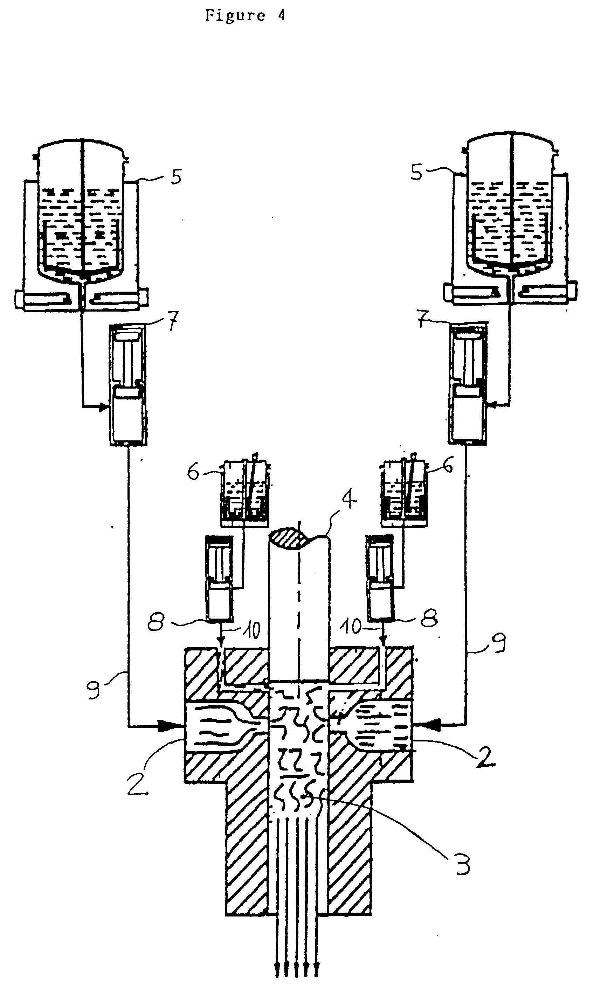

The process of the present invention is apparent from the description and the annexed figures 1 to 4.

The non-precatalyzed polymerizable resin and the catalyst are withdrawn from the respective tanks (5) and (6) by means of pumps (7) and (8) and, through lines (9) and (10), are injected into mixing head (1), at inlets (2) and (2').

On conclusion of the injection, the mixture which has formed in chamber (3) is discharged by means of self-cleaning piston (4). In this way it is possible to overcome all the problems described hereinbefore, in particular the ones connected with the injection of precatalyzed systems. Furthermore, a self-cleaning system for the head is realized, which prevents the polymerized residues from stagnating inside the head.

In the practical embodiment of the present invention, various changes, modifications and variations can be brought to the different parts which form the apparatuses used for the injection molding of non-precatalyzed, polymerizable, monocomponent or hybrid resins at high pressure and flow which are illustrated, as an exemplification, in the annexed figures of the drawings, without departing from the spirit and the scope of the invention.

### EXAMPLE

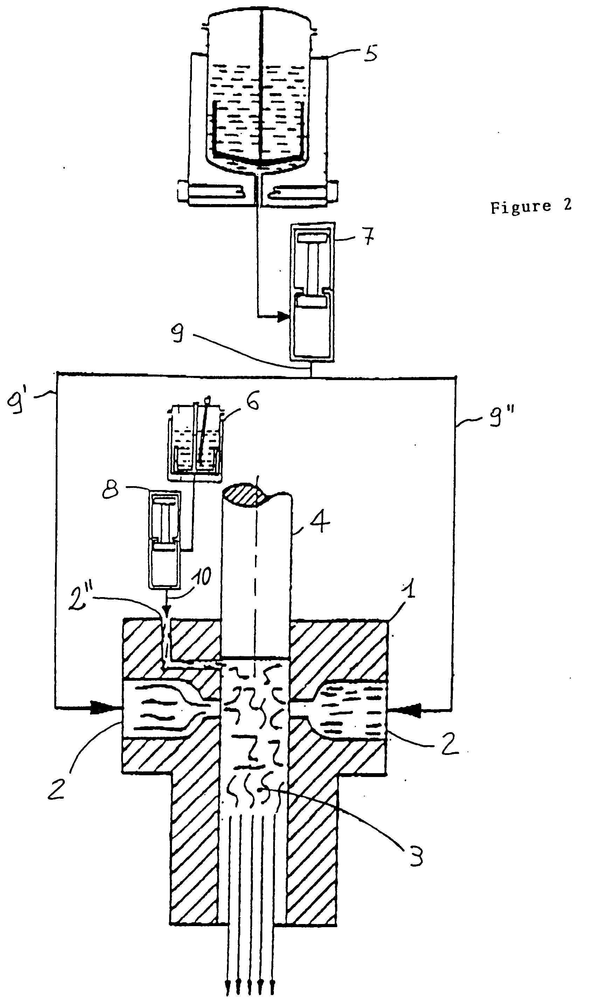

A dosing apparatus according to figure 2 was used. The resin tank 5 was connected to a high pressure multiple piston pump driven by a constant speed electric motor.

For the catalyst circuit a piston pump coaxially driven by the main pump motor was used.

The mixing head was of the kind used in the RTM (Resin Transfer Moulding) technology, with a self-cleaning piston driven by a oil-pressure unit; the mixing head was provided with a hole communicating with the mixing chamber for the supply of the catalyst (item 2'' in figure 2).

Moulding tests on a C section bumper having a dimension of 1500 x 250 mm, thickness 3,5 mm were performed; the resin was injected in only one central point of the mould. An unsaturated orthophtalic polyester resin (SIRESTER 940 by SIR-Sodietà Italiana Resine) was used; such resin contained 40% by weight of styrene, had a viscosity of 150 cps, was maintained at a constant temperature of 25°C and was accelerated with 0,2% by weight of cobalt octoate.

The catalyst was methyl ethyl ketone peroxide (MEK peroxide) dosed at 2% by weight.

In the mould, before the injection of the resin, glass fibre preforms were placed; such preforms wore obtained by thermoforming a mat (450 g/m²) of UNIFILO U720 by VETROTEX.

The finished preforms weighed about 800 g, which gave in the finished article a 50% by weight content of glass fibre.

An amount of 800 g of resin and of 16 g of the catalyst were injected, with a resin flow rate of 300 g/sec and a catalyst flow rate of 6 g/sec. The injection pressure was 130 bar (such pressure allowed a good mixing between the catalyst and the resin).

The mould was maintained et 100° C and the articles were drawn after 5 minutes from the end of the injection.

Articles well impregnated were obtained, blister free (analysis made on 10 different points on each article showed a void percentage less than 1%); the mechanical properties (tensile strength, modulus, impact resistance) are comparable with those of composite materials having the same glass fibre content.

The residual reactivity, determined on the articles without a post-curing treatment, revealed a polymerization degree higher than 99%, showing an optimal mixing between the resin and the catalyst.

## Claims

1. A process for the injection molding of systems of one or more non-precatalyzed, polymerizable, monocomponent or hybrid resins at high pressure and flow which comprises:
a) withdrawing from at least a first storage tank (5) at least a flow composed of a non-precatalyzed, polymerizable monocomponent or hybrid resin;
b) withdrawing from at least a second storage tank (6) one or more flows composed of one or more resin-setting catalytic systems;
c) injecting at high pressure the two or more flows into a mixing head (1) equipped with at least two injection points, with a cylindrical mixing chamber and with a self-cleaning piston (4) capable of sliding within said chamber;
d) discharging the resulting mixture by means of the self-cleaning piston (4) of the mixing head (1).

2. The process of claim 1, wherein the polymerizable resin flows withdrawn from the respective storage tanks are two and they are fed to two injection points of the mixing head, while the catalyst flow is introduced into said head through a third inlet, which is shifted with respect to the other two inlets.

3. The process of claim 2, wherein the catalyst flows are two and are fed to the mixing head through a third inlet and a fourth inlet.

4. The process of any of the preceding claims, wherein the injection pressures range from 1 to 300 bar.

5. The process of any of the preceding claims, wherein the weight ratios of resin to catalyst are in the range of from 10/1 to 2,000/1.

## Patentansprüche

1. Verfahren zum spritzgießen von Systemen von einem oder mehreren nicht vorkatalysierten, polymerisierbaren Einzelkomponenten- oder Hybridharzen bei hohem Druck und Durchfluß, das umfaßt:
a) Abziehen aus wenigstens einem ersten Vorratsbehälter (5) von wenigstens einer Abflußmenge, bestehend aus einem nicht vorkatalysierten, polymerisierbaren Einzelkomponenten- oder Hybridharz;
b) Abziehen aus wenigstens einem zweiten Vorratsbehälter (6) von einer oder mehreren Abflußmengen, bestehend aus einem oder mehreren harzhärtenden katalytischen Systemen;
c) Einspritzen bei hoher Temperatur der beiden oder mehreren Abflußmengen in einen Mischkopf (1), der versehen ist mit wenigstens zwei Einspritzpunkten, mit einer zylindrischen Mischkammer und mit einem selbstreinigenden Kolben (4), der in der Kammer gleiten kann;
d) Austragen des erhaltenen Gemisches mittels des selbstreinigenden Kolbens (4) aus dem Mischkopf (1).

2. Verfahren nach Anspruch 1, worin die polymerisierbaren Harzabflußmengen, die aus den entsprechenden Vorratsbehältern abgezogen werden, zwei sind, und diese zu zwei Einspritzpunkten des Mischkopfes geführt werden, während die Katalysatorabflußmenge in den Kopf durch einen dritten Einlaßpunkt eingeführt wird, der im Hinblick auf die beiden anderen Einlaßpunkte verschoben ist.

3. Verfahren nach Anspruch 2, worin die Katalysatorabflußmenge zwei Mengen sind und dem Kopf durch einen dritten Einlaßpunkt und einen vierten Einlaßpunkt zugeführt wird.

4. Verfahren nach einem der vorangegangenen Ansprüche, worin der Einspritzdruck im Bereich von 1 bis 300 bar liegt.

5. Verfahren nach einem der vorangegangenen Ansprüche, worin die Gewichtsverhältnisse von Harz zu Katalysator im Bereich von 10/1 bis 2000/1 liegen.

## Revendications

1. Procédé pour le moulage par injection de systèmes d'une ou de plusieurs résines polymérisables, non-précatalysées à un seul composant ou hybrides, à une haute pression et avec un débit élevé, qui comprend:
(a) le soutirage à partir d'au moins une première cuve de stockage (5) d'au moins un courant composé d'une résine polymérisable, non-précatalysée, à un seul composant ou hybride,
(b) le soutirage à partir d'une seconde cuve de stockage (6) d'un ou de plusieurs courants composés d'un ou de plusieurs systèmes catalytiques de durcissement de résine;
(c) l'injection à haute pression des deux ou plusieurs courants dans une tête de mélange (1) équipée d'au moins deux points d'injection, d'une chambre de mélange cylindrique et d'un piston auto-nettoyant (4) capable de coulisser à l'intérieur de cette chambre;
(d) le déchargement du mélange résultant au moyen du piston auto-nettoyant (4) de la tête de mélange (1).

2. Procédé suivant la revendication 1, dans lequel les courants de résine polymérisable soutirés à partir des cuves de stockage respectives sont au nombre de deux et ils sont introduits au niveau de deux points d'injection de la tête de mélange, tandis que le courant de catalyseur est introduit dans cette tête par l'intermédiaire d'une troisième entrée, qui est décalée relativement aux deux autres entrées.

3. Procédé suivant la revendication 2, dans lequel les courants de catalyseur sont au nombre de deux et ils sont introduits dans la tête de mélange au niveau d'une troisième entrée et d'une quatrième entrée.

4. Procédé suivant l'une quelconque des revendications précédentes, dans lequel les pressions d'injection sont comprises dans la gamme de 1 à 300 bar.

5. Procédé suivant l'une quelconque des revendications précédentes, dans lequel les rapports en poids de la résine au catalyseur sont compris dans la gamme de 10/1 à 2.000/1.
